# EUROPÄISCHE PATENTSCHRIFT

(11) **EP 3 802 150 B1**
(45) Veröffentlichungstag und Bekanntmachung des Hinweises auf die Patenterteilung: **09.08.2023**
(21) Anmeldenummer: 19733968.2
(22) Anmeldetag: 07.06.2019
(51) Int. Cl.: B60B 5/02, B29C 70/00, B60B 3/10

(54) **HERSTELLVERFAHREN EINES SPEICHENSTERNS AUS ENDLOSFASER-KUNSTSTOFF-VERBUND**
METHOD FOR PRODUCING A SPIDER FROM CONTINUOUS FIBRE PLASTIC COMPOSITE
PROCÉDÉ DE FABRICATION D'UNE ÉTOILE À RAYURES EN COMPOSITE DE FIBRES PLASTIQUES

(30) Priorität: 09.06.2018 DE 102018113797
(43) Veröffentlichungstag der Anmeldung: 14.04.2021
(73) Patentinhaber: Leibniz-Institut für Verbundwerkstoffe GmbH, 67663 Kaiserslautern (DE)
(72) Erfinder: BÜCKER, Marcel, 67655 Kaiserslautern (DE)
(74) Vertreter: Dr. Langfinger & Partner
(86) Internationale Anmeldenummer: PCT/EP2019/065043
(87) Internationale Veröffentlichungsnummer: WO 2019/234250

(56) Entgegenhaltungen:
- DE-A1- 10 145 630
- DE-A1-102016 210 756
- JP-A- S61 242 833
- JP-A- S61 242 834
- US-A1- 2016 236 423

## Beschreibung

Diese Erfindung betrifft ein Verfahren zum Herstellen eines Speichensterns mit einem oder mehreren Endlosfaserbündeln. Weiter betrifft die Erfindung einer Herstellvorrichtung zum Herstellen des Speichensterns.

Ein Speichenstern ist ein zumindest näherungsweise sternförmiges Gebilde, dessen Strahlen durch Speichen gebildet werden

Es ist bekannt, Speichenräder aus Faser-Kunststoff-Verbundmaterial herzustellen. Im Stand der Technik sind Kraftfahrzeugfelgen aus Faser-Kunststoff-Verbundmaterial bekannt, die Gussfelgen nachempfunden sind. Diesen wird ihre Form durch Fasermatten gegeben, die auf eine Formvorlage aufgebracht werden. Die getränkten Fasermatten werden ausgehärtet, um das Speichenrad herzustellen.

Nachteilig an diesem Stand der Technik ist, dass vorgeformte Formelemente benötigt werden, um der Felge ihre Form zu geben. Solche Formen sind relativ aufwendig herzustellen und entsprechend teuer. Darüber hinaus ermöglichen sie nur die Herstellung eines bestimmten Typs von Speichenrad in einer bestimmten Größe. Außerdem ist die Faserausnutzung in den bekannten Lösungen nicht optimal.

Die EP 0 089 809 A1 offenbart ein faserverstärktes Element mit näherungsweise der Form eines Kleeblattes, das als Speichenelement für ein Schwungrad verwendet werden kann. Es werden ausgehend von einem Nabenabschnitt drei Faserbündel um drei die Speichenform vorgebende, ringförmige Formgebungselemente für einen Speichenabschnitt mit jeweils zwei Speichen gelegt, wobei die Faserbündel von einem Speichenabschnitt zum nächsten Speichenabschnitt verlaufen.

Auch hier ist ein Nachteil, dass die Formgebungselemente jeweils nur für einen bestimmten Typ von Speichenelement geeignet sind. Dies macht dieses Verfahren unflexibel hinsichtlich der Herstellung verschiedener Typen von Speichenelementen.

Die JP S61/242833 betrifft ein Verfahren zum Herstellen eines Speichenrads bei dem ein Faserbündel um felgenkranzseitige und nabenseitige Umlenkeinrichtungen gewickelt wird.

Aus der US 2016/236423 ist ein Verfahren zur Herstellung einer Speicheneinheit in Form eines geschlossenen Rings in Sternform unter Verwendung von faserverstärkten Kunststoffen bekannt, wobei ein Faserbündel zwischen dem Innen- und dem Aussenumfang entlang denselben Speichen geführt wird.

Aufgabe der Erfindung ist es, eine größere Flexibilität bezüglich der Herstellung verschiedener Typen von Speichensternen und/oder Rädern oder Felgen zu ermöglichen.

Gegenstand der Erfindung ist ein Herstellverfahren für einen Speichenstern, bei welchem eine Herstellvorrichtung verwendet wird, die mehrere felgenkranzseitige Umlenkeinrichtungen und mehrere nabenseitige Umlenkeinrichtungen aufweist. Die Herstellvorrichtung wird zum Wickeln eines Faserwickels und zur Verformung des Faserwickels zu einem Speichenstern verwendet. Die felgenkranzseitigen Umlenkeinrichtungen und die nabenseitigen Umlenkeinrichtungen sind um ein Inneres der Anordnung aus den Umlenkeinrichtungen herum angeordnet. In einem ersten Schritt wird ein Endlosfaserbündel zumindest um einen Teil der felgenkranzseitigen Umlenkeinrichtungen herum als Faserwickel gewickelt. In einem zweiten Schritt nach diesem Wickeln wird zumindest ein Teil der nabenseitigen Umlenkeinrichtungen in Richtung des Inneren der Anordnung verschoben, wobei der Faserwickel sternförmig verformt wird. Zwischen den nabenseitigen Umlenkeinrichtungen und den felgenkranzseitigen Umlenkeinrichtungen bilden sich aus Teilen des Faserwickels Speichen aus, die zumindest einen Teil eines geschlossenen Speichensterns bilden.

Erfindungsgemäß ist ein Speichenstern durch Verformung eines Faserwickels herstellbar und kann somit als verformter Ring betrachtet werden. Bevorzugt verlaufen die Speichen zumindest näherungsweise radial. Die Verbindungen zwischen den Enden der Speichen am Innendurchmesser und am Außendurchmesser haben bevorzugt unterschiedliche Längen. Alternativ können Speichen auch parallel ausgebildet werden. Die Speichen sind bevorzugt zumindest zu einem großen Teil gerade.

Ein Faserbündel ist bevorzugt ein Bündel aus mehreren Endlosfasern, zum Beispiel ein Roving oder mehrere Rovings, die insbesondere unidirektionalen Faserverlauf aufweisen, oder ein Band, ein Towpreg, ein langgestrecktes Prepreg, oder ein langgestrecktes Gelege oder Gewebe. Eine Endlosfaser ist, wie im Sprachgebrauch in der Faserverbundwerkstofftechnik üblich, nicht tatsächlich unendlich lang. Eine Endlosfaser sei in dieser Patentanmeldung als eine Faser mit der speziellen Eigenschaft definiert, dass sie länger als eine Speiche ist. Es ist jedoch auch denkbar, Fasern, die kürzer als eine Speiche sind, zu einem längeren Faserbündel zu verbinden und zu verwenden.

Ein Speichenstern kann zum Beispiel als ein Teil eines Speichenrades vorgesehen sein. Es kann der Verbindung einer Nabe mit einem Felgenkranz dienen. Vorzugsweise hat der Speichenstern eine ganzzahlige Anzahl von Speichen. Vorzugsweise ist der Speichenstern rotationssymmetrisch ausgebildet, wobei zueinander rotationssymmetrische Abschnitte insbesondere jeweils zwei Speichen umfassen.

Ein Mittelpunkt der Anordnung der benutzten Umlenkeinrichtungen kann z.B. ein Wickelzentrum sein. Das Wickelzentrum kann jedoch auch ein anderer Punkt innerhalb dieser Anordnung sein.

Es können Reserverumlenkeinrichtungen für Speichensterntypen vorgesehen sein, die eine größere Anzahl von Umlenkstellen erfordern und die während der Herstellung eines Speichensterns mit einer geringeren Anzahl von Umlenkstellen unbenutzt bleiben. Beispielsweise können Speichensterne mit Gruppen von felgenseitigen und nabenseitigen Umlenkeinrichtungen hergestellt werden, wobei diese Gruppen verschiedene Anzahlen von Umlenkeinrichtungen haben können. Im einfachsten Fall wechseln sich eine felgenseitige und eine nabenseitige Umlenkeinrichtung ab. Die Gruppen weisen dann jeweils eine Umlenkeinrichtung auf. Wenn zwei Umlenkeinrichtungen in einer Gruppe angeordnet sind, kann der Speichenstern einen längeren Abschnitt entlang der Nabenseite oder entlang der Felgenseite verlaufen. Außerdem ermöglichen zwei Umlenkeinrichtungen in wenigstens einer der Gruppen der felgenseitigen und nabenseitigen Umlenkeinrichtungen durch ihre Positionen in Umfangsrichtung, eine unterschiedliche Schrägstellung der Speichen zu erzeugen. Durch mehr als zwei Umlenkeinrichtungen in einer Gruppe ist es möglich, den Verlauf eines Umfangabschnitts des Speichensterns auf der Nabenseite oder der Felgenseite anzupassen, beispielsweise einem Kreisverlauf anzunähern. Es ist auch denkbar, Umlenkeinrichtungen im Verlauf einer Speiche zwischen der Felgenseite und der Nabenseite einzusetzen, um diese mit einem Knick zur versehen.

Die felgenkranzseitigen Umlenkeinrichtungen werden vorzugsweise zugleich mit den nabenseitigen Umlenkeinrichtungen verschoben, insbesondere derart, das eine Spannung im Faserwickel aufrechterhalten wird. Die nabenseitigen Umlenkeinrichtungen können dazu in einem größeren Ausmaß in Richtung des Inneren der Anordnung aus den Umlenkeinrichtungen verschoben werden.

Die nabenseitigen Umlenkeinrichtungen sind vor dem Verschieben bevorzugt in einem größeren Abstand von dem Inneren der Anordnung, insbesondere von dem Wickelzentrum, angeordnet als die felgenkranzseitigen Umlenkeinrichtungen. Nach dem Verschieben sind die felgenkranzseitigen Umlenkeinrichtungen in einem größeren Abstand von dem Inneren der Anordnung, insbesondere von dem Wickelzentrum, als die nabenseitigen Umlenkeinrichtungen angeordnet. Als für den Abstand relevante Stellen der Umlenkeinrichtungen seien diejenigen definiert, an denen der Faserwickel die Umlenkeinrichtungen verlässt.

Vorzugsweise hat der Faserwickel in radialer Richtung überall zumindest näherungsweise dieselbe Dicke. Auf diese Weise kann sich eine gleichmäßige Dicke der Speichen in dem daraus entstehenden Speichenstern ausbilden. Zwischen den Speichen liegende Bereiche des Speichensterns können dieselbe Dicke haben.

Vorzugsweise wird der Faserwickel in Lagen übereinander gewickelt. Die Positionen der Lagen im Faserwickel werden bei der Verformung bevorzugt beibehalten. Der Faserwickel kann zu diesem Zweck bis zum Ende der Verformung unter Spannung oder zumindest in Form gehalten werden.

Die Umlenkeinrichtungen können als Hülsen ausgeführt sein, die im Inneren eine Durchgangsbohrung aufweisen. In diesem Fall können die Hülsen an oder in dem Speichenstern verbleiben oder wieder entfernt werden. Eine Hülse kann zur Verformung eines Faserwickels zu einem Speichenstern auf einem Umlenkeinrichtungträger aufgesteckt sein, die zum Beispiel als Achse an einem Beweger einer Verschiebungseinrichtung ausgebildet sein können. Nach der erfolgten Verformung kann der Speichenstern einschließlich der Hülsen von dem Umlenkeinrichtungsträger gezogen werden. Die Durchgangsbohrungen der Hülsen können zur Befestigung des Speichensterns an einer Narbe oder einem Felgenkranz genutzt werden. Denkbar ist, die Hülsen in eine Nabe oder einen Felgenkranz einzubetten.

Ein Vorteil dieses Herstellverfahrens ist, dass der Speichenstern durch Wickeln und Umformen des Faserwickels herstellbar ist. Bei der Umformung des Faserwickels werden die Fasern vorteilhaft weder gestaucht noch gestreckt, sondern ausschließlich gebogen. Es werden bei der Umformung keine Fasern aus der Wickelebene heraus aufgeworfen, obwohl das gewickelte Material auf beiden Seiten der neutralen Faser bei einer Biegung an der Biegestelle unterschiedlich lange Strecken bekommt. Durch die unterschiedliche Biegungsrichtung an den felgenkranzseitigen Umlenkeinrichtungen und den nabenseitigen Umlenkeinrichtungen gleichen sich Stauchung und Streckung auf beiden Seiten der neutralen Faser aus. Es erfolgt ausschließlich ein Abgleiten der Lagen aufeinander, was zumindest bei nass gewickeltem Material keinerlei Probleme bereitet.

Ein Vorteil dieses Verfahrens ist, dass durch die Verschiebbarkeit der Umlenkeinrichtungen große Freiheit bezüglich der herstellbaren Formen des Fasersterns besteht. Es ist möglich, mit derselben Herstellvorrichtung verschieden große Speichensterne und/oder mit unterschiedlicher Anzahl von Speichen herzustellen. Dazu können die Größe des Faserwickels, die Anzahl der Umlenkeinrichtungen, die Positionen zu Beginn und zum Ende des Umformens angepasst werden. Die Steuerung des Bewegungsverlaufs der felgenkranzseitigen Umlenkeinrichtungen und der nabenseitigen Umlenkeinrichtungen kann an die vorgenannten Gegebenheiten angepasst werden.

Vorzugsweise ist wenigstens ein Teil der felgenkranzseitigen Umlenkeinrichtungen in ihrer radialen Position in Bezug auf das Innere der Anordnung, insbesondere von einem Wickelzentrum, zu einer Startposition für den Verformungsprozess des Faserwickels verschiebbar ausgeführt, um die Größe des herzustellenden Speichensterns zu einzustellen.

Vorzugsweise sind die felgenkranzseitigen Umlenkeinrichtungen wenigstens näherungsweise in Wickelrichtung des Faserwickels oder wenigstens näherungsweise in Umfangsrichtung um das Innere der Anordnung herum, insbesondere um das Wickelzentrum herum, verschiebbar, insbesondere derart, dass wenigstens eine Speiche eines Speichensterns zumindest näherungsweise radial ausgerichtet wird.

Mit einer solchen Verschiebung kann die Ausrichtung der Speichen in Bezug auf eine Radialrichtung des Speichensterns erreicht werden. Somit kann eine Abänderung des Designs des Speichensterns bewirkt werden. Beispielsweise können Speichen radial verlaufen oder benachbarte Speichen parallel verlaufen oder abwechselnd die gleiche Schrägstellung in entgegengesetzter Richtung oder einen davon abweichenden Verlauf zwischen Nabe und Felgenkranz aufweisen.

Vorzugsweise wird um einen Außenumfang des Speichensterns herum ein Felgenwickel aus einem Endlosfaserbündel gewickelt, der insbesondere als Felgenkranz oder als ein Teil eines Felgenkranzes ausgebildet ist.

Auf diese Weise kann eine Felge hergestellt werden. Vorzugsweise wird dasselbe Faserbündel, aus dem zuvor der Speichenstern hergestellt wurde, um den Speichenstern herum gewickelt, um den Felgenkranz oder einen Teil davon herzustellen.

Vorzugsweise ist eine Umlenkeinrichtung um eine Drehachse drehbar ausgeführt und an ihrem Außenumfang mit einer helixförmigen Aussparung versehen, in die der Faserwickel abgelegt wird. Die Drehachse verläuft im Inneren der helixförmigen Aussparung und die Umlenkeinrichtung wird verdreht, um den Faserwickel in Richtung der Drehachse am Außenumfang der Umlenkeinrichtung zu verlagern. Es ist auch denkbar, eine Doppelhelix zu verwenden.

Mit Hilfe einer derartigen Umlenkeinrichtung ist es möglich, die Lage einer Speiche in Axialrichtung des Speichenrades zu verändern.

Insbesondere kann mit einer solchen Formgebungseinrichtung bewirkt werden, dass Abschnitte des Speichensterns und/oder des Speichenrades, die daran anliegen, eine von der Formgebungseinrichtung vorgegebene Form bekommen, bevorzugt eine gleichmäßige Rundung der Außenkontur des Speichensterns und/oder des Felgenwickels, bevorzugt mit dermselben Radius.

Es können unterschiedliche Formgebungseinrichtungen für Außenabschnitte des Speichensterns und Abschnitte eines Felgenwickels verwendet werden. Es können unterschiedliche Formgebungseinrichtungen für unterschiedliche Typen von Speichensternen verwendet werden.

Eine Formgebungseinrichtung kann an einer eigenen Verschiebeeinrichtung verschieblich angeordnet sein.

Der fertig hergestellte Speichenstern mit oder ohne Felgenwickel ist bevorzugt nass gewickelt, insbesondere aus vorimprägniertem Material. Es ist jedoch auch möglich, den Speichenstern nach dem Wickeln zu imprägnieren. Im getränkten Zustand kann der Speichenstern ausgehärtet werden bzw. durch chemische Reaktion ohne weiteres Zutun aushärten. Anschließend kann der Speichenstern und insbesondere der Felgenwickel rundgedreht oder rundgeschliffen werden.

In einem weiteren Aspekt der Erfindung wird eine Herstellvorrichtung zum Herstellen eines Speichensterns mit Endlosfasern vorgeschlagen. Die Herstellvorrichtung weist mehrere felgenseitige Umlenkeinrichtungen und mehrere nabenseitige Umlenkeinrichtungen auf, die jeweils zur Aufnahme eines Faserwickels eingerichtet sind und die zu Beginn einer Verformung eines Faserwickels um ein Inneres einer Anordnung aus den Umlenkeinrichtungen herum angeordnet sind. Weiter weist die Herstellvorrichtung mehrere Verschiebeeinrichtungen für die nabenseitigen Umlenkeinrichtungen auf, durch die die nabenseitigen Umlenkeinrichtungen von einer Position zu Beginn der Verformung in Richtung des Inneren der Anordnung verschiebbar sind.

Eine Anordnung von Umlenkeinrichtungen um ein Inneres der Anordnung herum bedeutet, dass sich die Umlenkeinrichtungen zu Beginn der Verformung nicht im Inneren der Anordnung, sondern außerhalb eines inneren Bereichs befinden, zum Beispiel an dessen Rand oder in der Nähe davon.

Mittels einer solchen Herstellvorrichtung können verschieden geformte Speichensterne aus Faserwickeln hergestellt werden.

Eine Verschiebeeinrichtung weist eine Verschiebeachse auf, entlang der eine Umlenkeinrichtung beweglich ist, insbesondere linear. Bevorzugt weist die Herstellvorrichtung mehrere Verschiebeeinrichtungen für die felgenseitigen Umlenkeinrichtungen auf. Durch diese Verschiebeeinrichtungen ist es möglich, zeitgleich die nabenseitigen und die felgenseitigen Umlenkeinrichtungen zu verschieben. Durch geeignete Verhältnisse der Bewegung der beiden Typen von Umlenkeinrichtungen kann bewirkt werden, dass der Faserwickels während des Verformens stramm gehalten wird. Dies hat den Vorteil, dass die einzelnen Lagen aus Endlosfaserbündeln ihre Anordnung behalten und einander während des Verformens nicht überkreuzen. Auf diese Weise kann eine hohe Qualität des Speichensterns erreicht werden.

Es kann eine Ansteuereinrichtung vorgesehen sein, mit der die Bewegungen der Verschiebeeinrichtungen für die felgenseitigen und die nabenseitigen Umlenkeinrichtungen koordinierbar sind, um den Faserwickel während des Verformens stramm zu halten. Vorzugsweise umfasst die Ansteuereinrichtung eine elektronische Maschinensteuerung.

Vorzugsweise umfasst die Herstellvorrichtung eine Wickeleinrichtung, mit der ein Endlosfasermaterial um ein Wickelzentrum herum wickelbar ist, um den Faserwickel zu erzeugen. Dazu kann die Anordnung der felgenseitigen Umlenkeinrichtungen in Rotation versetzt werden. Insbesondere kann so auf den Außenseiten der Umlenkeinrichtungen ein Endlosfaserbündel aufgewickelt werden. In einer Alternative kann auch die Wickeleinrichtung oder ein Teil davon um die felgenseitigen Umlenkeinrichtungen herum bewegt werden. Alternativ ist es möglich, den Faserwickel von Hand zu wickeln.

Vorzugsweise ist wenigstens eine Verschiebeeinrichtung in einer Fläche, in der die Umlenkeinrichtungen angeordnet sind, schwenkbar ausgeführt. Insbesondere ist die Verschiebeeinrichtung um einen Punkt im Inneren der Anordnung herum schwenkbar, bevorzugt um das Wickelzentrum herum.

Ein solches Schwenken erlaubt, die Position der Umlenkeinrichtungen in Umfangsrichtung um die Anordnung der Umlenkeinrichtungen oder das Wickelzentrum herum zu verändern. Auf diese Weise können die Abstände zwischen benachbarten Umlenkeinrichtungen verändert werden. Alternativ oder zusätzlich ist es auch denkbar, eine Verschiebeeinrichtung in Bezug auf ihre Verschiebeachse seitlich versetzbar auszuführen.

Vorzugsweise folgen in Wickelrichtung um das Innere der Anordnung herum Gruppen von felgenseitigen und nabenseitigen Umlenkeinrichtungen aufeinander. Eine Gruppe umfasst bevorzugt wenigstens eine Umlenkeinrichtung, bevorzugt genau zwei Umlenkeinrichtungen und/oder mehr als zwei Umlenkeinrichtungen. Insbesondere folgt auf zwei felgenseitige Umlenkeinrichtungen eine nabenseitige Umlenkeinrichtung.

Die letztgenannte Option hat den Vorteil, dass der Abstand der radial äußeren Enden der erzeugten Speichen in Umfangsrichtung um die Anordnung größer ausfällt als der Abstand der radial inneren Enden der erzeugten Speichen in radialer Richtung. Dies ermöglicht einen längeren Abschnitt des Speichensterns, der parallel zu einem Felgenwickel verläuft. In einer Ausführungsform ist die Verbindung der radial innen Enden der erzeugten Speichen in Umfangsrichtung nur durch eine Umlenkung an einer nabenseitigen Umlenkeinrichtung realisiert. Die Verbindung der radial äußeren Enden der erzeugten Speichen in radialer Richtung kann über zwei Umlenkeinrichtungen erfolgen. Es ist denkbar, dass die Umlenkeinrichtungen einer Gruppe gemeinsam von einer Verschiebeeinrichtung verschiebbar sind. Es ist denkbar, dass in diesem Fall zugleich mit dem Verschieben der Abstand von Umlenkeinrichtungen einer Gruppe zueinander veränderbar ist.

Die Umlenkeinrichtungen können auf eine gemeinsame Trägerplatte montiert sein. Alternativ oder zusätzlich können eine oder mehrere Verschiebeeinrichtungen an der Trägerplatte befestigt sein.

Vorzugsweise weist eine Umlenkeinrichtung eine helixförmige Aussparung auf und ist um eine theoretische Drehachse herum drehbar ausgeführt, wobei ein Faserwickel die Drehachse im bewickelten Zustand umschlingt.

Eine Umlenkeinrichtung mit einer helixförmigen Aussparung ist bevorzugt zumindest annähernd rollenförmig ausgebildet. Eine solche Umlenkeinrichtung kann einen zentralen Abschnitt mit einem kleineren Durchmesser als vorstehende Wangen an den axialen Enden aufweisen.

Eine Umlenkeinrichtung mit einer helixförmigen Aussparung hat den Vorteil, dass durch Drehen der Umlenkeinrichtung um die Drehachse die Lage des Faserwickels auf der Umlenkeinrichtung in Richtung der Drehachse einstellbar ist. Auf diese Weise ist es möglich, eine Stelle des Speichensterns, die eine Umlenkeinrichtung herum verläuft, aus einer Wickelebene heraus zu bewegen. So kann eine Speiche schräggestellt werden, wobei sie sich aus einer Wickelebene herausbewegt. Ein Speichenstern kann durch Speichen, die in Axialrichtung schräggestellt sind, vorteilhaft auf ihn wirkende Axialkräfte besser übertragen. Beispielsweise können aufeinanderfolgende Speichen oder Gruppen von Speichen entgegengesetzt gerichtete Schrägstellung aufweisen. Die Einstellung der Lage des Faserwickels in Richtung der Drehachse wird vorzugsweise nach dem Bewickeln der Umlenkeinrichtung vorgenommen.

Die Herstellvorrichtung ist bevorzugt dazu eingerichtet, nach der Fertigstellung eines Speichensterns in der Herstellvorrichtung einen Felgenwickel auf die Abschnitte des Speichensterns, die zwischen den felgenseitigen Umlenkeinrichtungen verlaufen, aufzuwickeln. Der Felgenwickel kann ein Felgenkranz oder ein Teil davon sein. Zur Erzeugung des Felgenwickels muss der Speichenstern nicht aus der Herstellvorrichtung entnommen werden.

Die Herstellvorrichtung kann eine oder mehrere Formgebungeinrichtungen aufweisen, die insbesondere dieselbe Anzahl wie die Anzahl der felgenseitigen Umlenkeinrichtungen haben. Die Formgebungseinrichtungen sind zwischen felgenseitigen Umlenkeinrichtungen angeordnet. Eine Formgebungseinrichtung liegt an einem Abschnitt des Speichensterns oder an einem Abschnitt des Felgenwickels an und überträgt ihre Form darauf. Auf diese Weise kann z.B. eine Rundung am Außenumfang des Speichensterns bzw. des Felgenwickels erreicht werden. Es ist möglich, durch Einsatz der Formgebungseinrichtungen ein rundes Rad zu erzeugen. Speicherstern-Formgebungseinrichtungen können zwischen benachbarten felgenseitigen Umlenkeinrichtungen angeordnet sein, zwischen denen ein Abschnitt des Speichensterns verläuft. Felgenwickel-Formgebungseinrichtungen können zwischen diesen vorgenannten Abschnitten des Speichensterns verlaufen. Formgebungseinrichtungen können dazu eingerichtet sein, in die Herstellvorrichtung eingesetzt und aus dieser entnommen oder auf andere Weise unwirksam gemacht zu werden. So können die Formgebungseinrichtungen vorteilhaft dann zum Einsatz kommen, wenn sie benötigt werden, und stören ansonsten den Herstellprozess des Speichensterns nicht.

Es wird außerhalb des beanspruchten Gegenstands ein Speichenstern aus einem Faser-Kunststoff-Verbund vorgeschlagen, welcher als ein geschlossener Ring in Sternform ausgebildet ist. Der Speichenstern weist Speichen zwischen einem nabenseitigen Innenumfang des Speichensterns und einem felgenseitigen Außenumfang des Speichensterns auf. In dem Speichenstern verläuft ein einziges Faserbündel mehrfach zwischen dem Innenumfang und dem Außenumfang entlang von Speichen des Speichensterns.

Ein Vorteil einer solchen Ausgestaltung mit nur einem einzigen Faserbündel ist, dass ein solcher Speichenstern mit einer einfachen Wickeleinrichtung unkompliziert aus einem einzigen Faserbündel gewickelt und dann umgeformt werden kann. Außerdem kann ein Anfang des Faserbündels an beliebiger Stelle in dem Faserwickel positioniert sein. Auch dies erleichtert die Herstellung eines solchen Speichensterns.

Ein Faserbündel kann zum Beispiel ein Roving oder mehrere Rovings oder ein Band oder ein langgestrecktes Stück eines Geleges oder Gewebes sein. Das Faserbündel umfasst bevorzugt sogenannte Endlosfasern.

Vorzugsweise umfasst der Speichenstern in keinem Abschnitt wesentlicher Länge speziell zu diesem Zweck eingebrachte formgebende Elemente. Es ist jedoch möglich, dass Umlenkelemente aus dem Herstellprozess des Speichensterns in dem Speichenstern verbleiben. Insbesondere kann die Form des Speichensterns durch ausgehärteten Faser-Kunststoff-Verbund vorgegeben sein, und bevorzugt ist die Form des Speichensterns ausschließlich durch ausgehärtetes Faser-KunststoffMaterial festgelegt.

Vorzugsweise hat der Speichenstern eine ganzzahlige Anzahl von Speichen. Vorzugsweise ist der Speichenstern rotationssymmetrisch ausgebildet, wobei zueinander rotationssymmetrische Abschnitte jeweils zwei Speichen umfassen.

Bevorzugt verlaufen die Speichen zumindest näherungsweise radial. Die Verbindungen zwischen den Enden der Speichen am Innenumfang und am Außenumfang haben bevorzugt unterschiedliche Längen. Alternativ können Speichen auch parallel ausgebildet werden.

Vorzugsweise verläuft das Faserbündel durch alle Speichen. Das Faserbündel verläuft bevorzugt mehr als einen Umlauf entlang des Speichensterns und nimmt insbesondere mehrfach denselben Weg durch den Speichenstern.

Auf diese Weise kann der Speichenstern durch einen einzigen Wickelvorgang aus einem einzigen Faserbündel gewickelt werden.

Ein Speichenstern kann beispielsweise als ein elastisches Element einer Kupplung genutzt werden. Eine solche Kupplung kann insbesondere eine Ausgleichskupplung sein. Der Speichenstern kann dann zum Beispiel an seiner Nabenseite an einem ersten Kupplungsanschlusselement und an seiner Felgenseite an einem zweiten Kupplungsanschlusselement befestigt sein. Durch seine Elastizität kann er einen Winkelversatz und/oder einen Parallelversatz der beiden Kupplungsanschlusselemente ausgleichen.

Weiterhin wird außerhalb des beanspruchten Gegenstands ein Speichenrad aus einem Faser-Kunststoff-Verbund mit einer Nabe, einem Felgenkranz und mehreren Speichen zwischen der Nabe und dem Felgenkranz vorgeschlagen. Das Speichenrad umfasst einen Speichenstern gemäß einer der vorstehend beschriebenen Ausführungsformen, wobei zumindest ein Teil des Felgenkranzes um den Speichenstern herum aus einem Faserbündel gewickelt ist.

Vorzugsweise ist das Faserbündel, welches zumindest einen Teil des Felgenkranzes bildet, dasselbe Faserbündel, aus dem auch der Speichenstern hergestellt ist.

Ein Speichenstern kann an einem Felgenkranz und an einer Nabe befestigt werden, sodass daraus ein Speichenrad gebildet wird. Ein Speichenrad kann insbesondere als eine Vibrationskupplung, ein Zahnrad, ein Riemenrad, ein Walzenboden, eine Schleifscheibe, ein Lüfterrad oder als ein anderes umlaufendes Bauelement oder Bauelement mit umlaufender Belastung ausgebildet sein kann. Eine Kupplung kann beispielsweise aus zwei miteinander verbundenen Speichensternen gebildet sein. Die Verbindung zwischen den Speichensternen ist bevorzugt in einem Bereich weit von den Drehzentrum der Kupplung entfernt angeordnet. Ein Speichenrad kann auch als eine Fahrzeugfelge ausgebildet sein, insbesondere für ein Kraftfahrzeug. Es ist auch möglich, einen Speichenstern für ein Speichenrad für statische Zwecke einzusetzen. Insbesondere kann ein solches Speichenrad wenigstens näherungsweise horizontal oder unter einem Winkel von weniger als 80° ausgerichtet sein. Ein Speichenrad kann insbesondere in der Mitte unterstützt sein und an seinem Außenbereich Lasten tragen. Der umgekehrte Fall, in dem das Speichenrad außen unterstützt ist und in der Mitte eine Last trägt, ist ebenfalls denkbar.

Gemäß einer Konfiguration ist der Speichenstern (5) an der Nabe (13) durch eine nabenseitige Umlenkeinrichtung (4) befestigt oder die Nabe (13) ist zur Aufnahme einer nabenseitigen Umlenkeinrichtung (4) eingerichtet, wobei die nabenseitige Umlaufeinrichtung (4) vorzugsweise als Hülse mit einer Durchgangsbohrung ausgeführt ist.

Eine nabenseitige Umlenkeinrichtung (4) kann die Festigkeit der Verbindung zwischen dem Speichenstern und der Nabe verbessern. Wenn die nabenseitige Umlenkeinrichtung als Hülse ausgeführt ist, kann das Speichenrad durch diese Hülse hindurch an einem Radträger festgeschraubt werden.

Vorzugsweise ist wenigstens ein Teil der Speichen in Radialrichtung schmal im Vergleich zu ihrer Tiefe in Axialrichtung. Auf diese Weise kann das Speichenrad über diese Speichen besonders gut Axialkräfte vom Felgenkranz zur Narbe übertragen. Durch die vergleichsweise geringere Ausdehnung in Radialrichtung haben die Speichen ein geringes Gewicht. Auf diese Weise kann das Speichenrad als Leichtbaukonstruktion den Anforderungen der axialen Kraftübertragung und des geringes Gewichts gerecht werden.

Die Speichen können zwischen der Nabe und dem Felgenkranz insbesondere auch in axiale Richtung des Speichenrades verlaufen. Auf diese Weise können Axialkräfte besser aufgenommen werden.

Vorzugsweise weist das Speichenrad eine geradzahlige Anzahl von Speichen auf.

Vorzugsweise ist der Speichenstern eines Speichenrades an einem axialen Ende des Felgenkranzes und bevorzugt auch an einem axialen Ende der Nabe angeordnet. Durch diese Anordnung ist im Inneren des Speichenrades Raum vorhanden, um dort z.B. eine Lagerung des Speichenrades vorzusehen.

In den Figuren sind beispielhaft Ausführungsformen der Erfindung beschrieben. Es zeigen:
Figur 1 schematisch eine Anordnung von felgenseitigen Umlenkelementen einer Herstellvorrichtung zum Herstellen eines Speichensterns;
Figur 2 schematisch die Anordnung aus Figur 1, jedoch mit einem Faserwickel, der um die felgenseitigen Umlenkelemente gewickelt wird;
Figur 3 schematisch die Anordnung aus Figur 2, jedoch mit zusätzlichen nabenseitigen Umlenkelementen;
Figur 4 schematisch die Anordnung aus Figur 3, wobei jedoch die nabenseitigen und die felgenseitigen Umlenkelemente zur Herstellung des Speichensterns verschoben sind;
Figur 5 schematisch die Anordnung aus Figur 4, wobei jedoch die Verschiebung der nabenseitigen und felgenseitigen Umlenkelemente weiter fortgeschritten ist;
Figur 6 schematisch die Anordnung aus Figur 5, wobei jedoch die Verschiebung der nabenseitigen und felgenseitigen Umlenkelemente noch weiter fortgeschritten ist;
Figur 7 schematisch die Anordnung aus Figur 6, wobei jedoch die Verschiebung der nabenseitigen und felgenseitigen Umlenkelemente abgeschlossen ist,
Figur 8 schematisch die Anordnung aus Figur 7, wobei jedoch der Speichenstern am Außenumfang mit einem Felgenwickel umwickelt ist;
Figur 9 schematisch die Anordnung aus Figur 8, wobei jedoch Abschnitte des Speichensterns und des Felgenwickels am Außenumfang durch Formgebungselemente zwischen den felgenseitigen Umlenkelementen konvex gewölbt sind;
Figur 10 eine Felge mit einem Speichenstern wie in Figur 7 dargestellt;
Figur 11 eine Verschiebeeinrichtung für eine Umlenkeinrichtung und
Figur 12 eine Umlenkeinrichtung mit helixförmigen Ausnehmung.

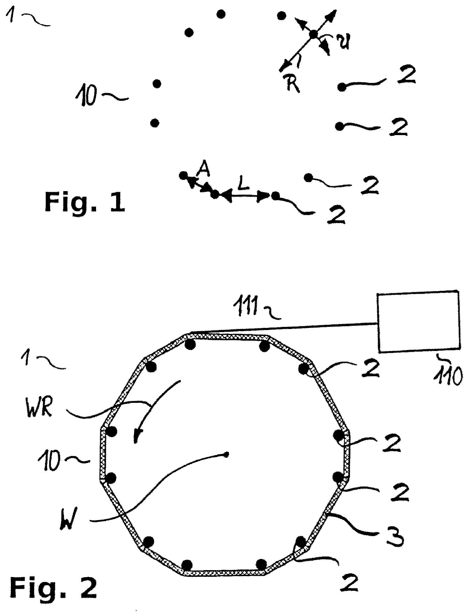

Figur 1 zeigt schematisch ein Anordnung von felgenseitigen Umlenkeinrichtungen 2 in einer Fläche 1 einer nicht detaillierter dargestellten Herstellvorrichtung 100. Die Fläche ist vorzugsweise eben ausgebildet. Die felgenseitigen Umlenkeinrichtungen 2 sind in Richtung des Inneren der Anordnung, bevorzugt auch von dem Inneren der Anordnung weg, verschieblbar angeordnet. Insbesondere sind die felgenseitigen Umlenkeinrichtungen 2 in Radialrichtung R verschieblich. Bevorzugt sind die felgenseitigen Umlenkeinrichtungen 2 zusätzlich in Umfangsrichtung U verschieblich. In der Darstellung der Figur 1 haben die felgenseitigen Umlenkeinrichtungen 2 bevorzugt paarweise einen geringeren Abstand A in Umfangsrichtung voneinander als die Breite einer Lücke L zwischen den Paaren. Es ist auch möglich, statt Paaren von zwei felgenseitigen Umlenkeinrichtungen 2 nur eine oder in Gruppen von mehr als zwei felgenseitigen Umlenkeinrichtungen 2 vorzusehen. Vorzugsweise sind die felgenseitigen Umlenkeinrichtungen 2 auf einem theoretischen Kreis angeordnet.

Figur 2 zeigt schematisch die Umlenkeinrichtungen 2 aus Figur 1, jedoch zusätzlich mit einem Faserwickel 3, der um die Umlenkeinrichtungen 2 gewickelt wird. Der Faserwickel 3 ist näherungsweise kreisförmig ausgebildet, jedoch sind die Abschnitte zwischen den felgenseitigen Umlenkeinrichtungen 2 gerade ausgebildet. Er wird um ein Wickelzentrum W aus einem Endlosfaserbündel 111 gewickelt. Das Endlosfaserbündel 111 wird von einer Wickeleinrichtung 110 bereitgestellt. Dabei können wie dargestellt die felgenseitigen Umlenkeinrichtungen 2 in Rotation in eine Wickelrichtung WR versetzt werden. Es ist auch möglich, dass die Wickeleinrichtung 110 um die felgenseitigen Umlenkeinrichtungen 2 rotiert.

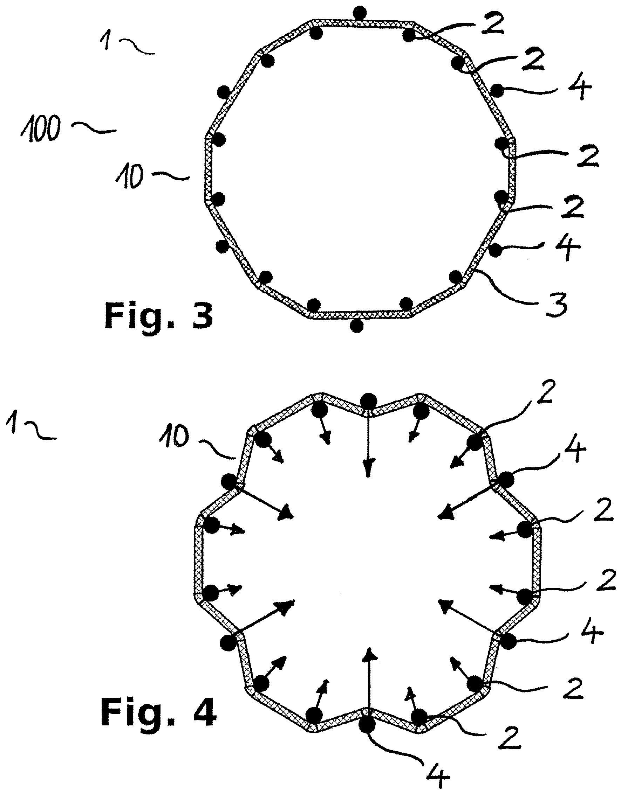

Figur 3 zeigt schematisch die Umlenkeinrichtungen 2 und den Faserwickel 3 aus Figur 2, jedoch sind in der Fläche 1 zusätzlich nabenseitige Umlenkeinrichtungen 4 eingezeichnet. Diese nabenseitigen Umlenkeinrichtungen 4 sind vorzugsweise in dem in Figur 2 dargestellten Zustand der Herstellvorrichtung nicht in der Fläche 1 präsent, um den Wickelvorgang zu erleichtern. Sie können zur Herstellung des in Figur 3 gezeigten Zustands beispielsweise von Hand in die Fläche 1 eingebracht oder automatisch dort positioniert werden. Die nabenseitigen Umlenkeinrichtungen 4 sind bevorzugt in der Mitte der Lücken zwischen den Paaren von felgenseitigen Umlenkeinrichtungen 2 angeordnet, wovon jedoch auch abgewichen werden kann. Die nabenseitigen Umlenkeinrichtungen 4 sind in Richtung des Inneren der Anordnung aus felgenseitigen Umlenkeinrichtungen 2, bevorzugt auch von dem Inneren der Anordnung weg, verschieblich angeordnet. Bevorzugt sind die felgenseitigen Umlenkeinrichtungen 2 zusätzlich in Umfangsrichtung U verschieblich. Vorzugsweise sind die nabenseitigen Umlenkeinrichtungen 2 auf einem theoretischen Kreis angeordnet.

Figur 4 zeigt schematisch die felgenseitigen und nabenseitigen Umlenkeinrichtungen 2, 4 sowie den Faserwickel 3 aus Figur 3, wobei der Beginn der Formung eines Speichensterns dargestellt ist. Zu diesem Zweck werden die nabenseitigen Umlenkeinrichtungen 4 in Richtung des Inneren der Anordnung 10 verschoben, was durch lange Pfeile dargestellt ist. Weil der Faserwickel 3 in seiner Länge nicht nachgibt, müssen auch die felgenseitigen Umlenkeinrichtungen 2 in Richtung des Inneren der Anordnung 10 verschoben werden. Da der Weg dieser Verschiebung geringer ist, ist sie durch kurze Pfeile dargestellt.

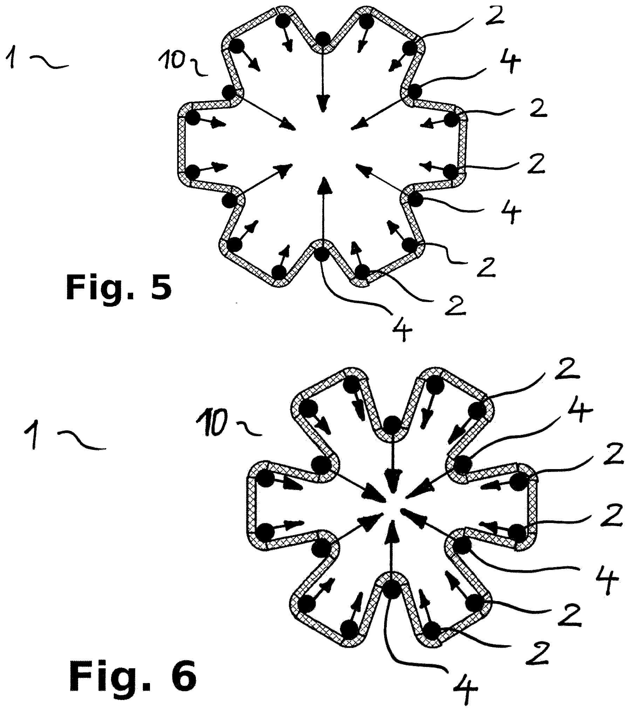

Figur 5 zeigt schematisch die felgenseitigen und nabenseitigen Umlenkeinrichtungen 2, 4 sowie den Faserwickel 3 aus Figur 4, wobei die Formung eines Speichensterns weiter fortgeschritten ist. In der Figur 3 wird deutlich, dass bei der Formung des Speichensterns die nabenseitigen Umlenkeinrichtungen 4 zu Beginn weiter von dem inneren der Anordnung 10 entfernt sind als die felgenseitigen Umlenkeinrichtungen 2. In der Figur 5 hat sich dies jedoch umgekehrt.

Figur 6 zeigt schematisch die felgenseitigen und nabenseitigen Umlenkeinrichtungen 2, 4 aus Figur 5 sowie den Faserwickel 3 aus Figur 5, wobei die Formung des Speichensterns noch weiter fortgeschritten ist.

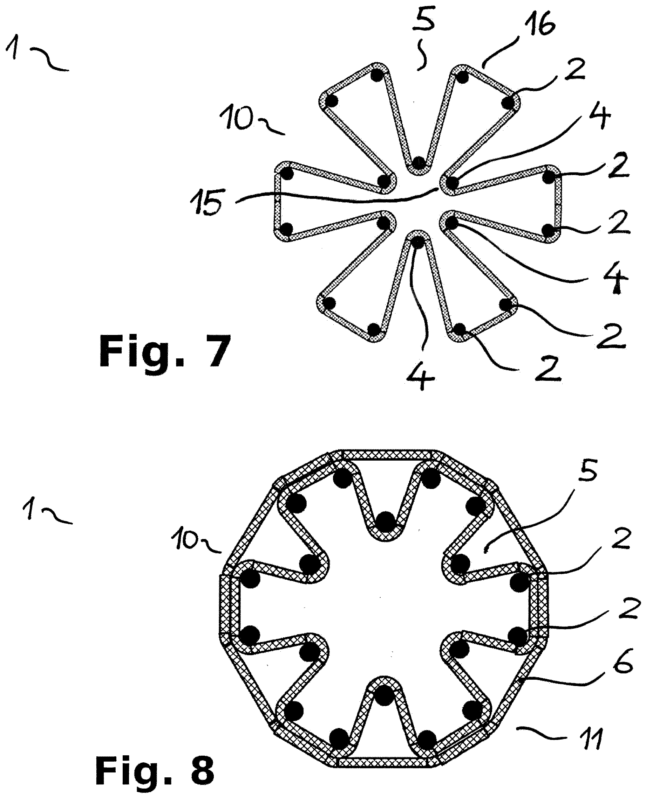

Figur 7 zeigt schematisch den fertig ausgebildeten Speichenstern 5 aus Figur 6. Die Figuren 1 bis 7 zeigen Stadien in einem Herstellverfahren eines Speichensterns. Der Maßstab der Figuren 1 bis 6 ist annähernd gleich sodass deutlich wird, dass der Außenumfang 16 des Speichensterns 5 bei der Herstellung aus einem Faserwickel mit der Verformung kontinuierlich abnimmt. Der Speichenstern weist einen Innenumfang 15 und einen Außenumfang 16 auf. Diese sind im Wesentlichen durch die Positionen der Umlenkeinrichtungen 2 und 4 festgelegt.

Figur 8 zeigt den fertig ausgebildeten Speichenstern 5 aus Figur 7, um den jedoch ein Felgenwickel 6 aus Endlosfasern gewickelt ist. Die felgenseitigen und nabenseitigen Umlenkeinrichtungen 2, 4 sind in derselben Position wie in Figur 7. Durch das Umwickeln des Speichensterns 5 mit einem Felgenwickel 6 kann der Speichenstern 5 die Speichen einer Felge 11 oder einer anderen radförmigen Vorrichtung bilden. Durch den Abstand der paarweise angeordneten felgenseitigen Umlenkeinrichtungen 2 ergibt sich ein Bereich des Speichensterns 5, der parallel zu dem Felgenwickel 6 liegt. Die paarweise Anordnung der felgenseitigen Umlenkeinrichtungen 2 bewirkt auch, dass die Speichen des Speichensterns 5 stärker in radialer Richtung ausgebildet sein können. Dies ist für die Aufnahme von Radialkräften vorteilhaft.

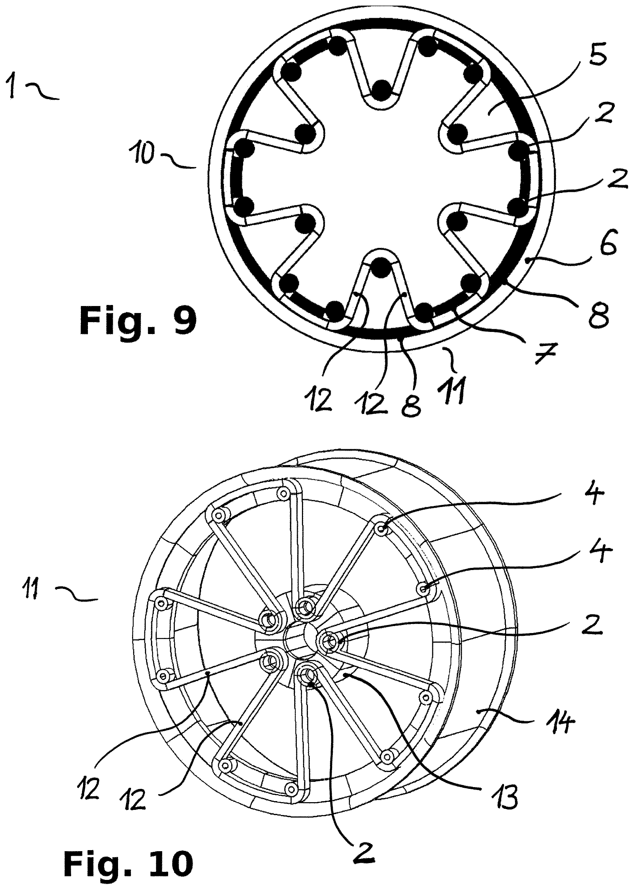

Figur 9 zeigt die Felge 11 aus Figur 8 in der Fläche 1, jedoch mit dem Unterschied, dass zur Erzielung einer besseren Rundheit des Felgenwickels 6 Speichenstern-Formgebungseinrichtungen 7 und Felgenwickel-Formgebungseinrichtungen 8 vorgesehen sind. Die Speichenstern-Formgebungseinrichtungen 7 sind im Inneren des Speichensterns 5 zwischen zwei felgenseitigen Umlenkeinrichtungen 2 angeordnet. Sie weisen auf ihrer Außenumfangseite eine konvexe Wölbung auf, welche bevorzugt in etwa den Außenradius der Felge 11 aufweist. Auf diese Weise kann der Abschnitt des Speichensterns 5 zwischen den felgenseitigen Umlenkeinrichtungen 2 gerundet ausgeführt werden. Die Felgenwickel-Formgebungseinrichtungen 8 sind zwischen zwei Speichen 12 des Speichensterns 5, jedoch außerhalb des Speichensterns 5 angeordnet. Die Felgenwickel-Formgebungseinrichtungen 8 haben auf ihrer Außenumfangseite eine konvexe Wölbung, welche bevorzugt etwa dem Außenradius der Felge 11 entspricht. Die Formgebungseinrichtungen 7, 8 sind vorzugsweise relativ zu den Umlenkeinrichtungen 2, 4 in der Fläche 1 positioniert. Wie dargestellt sind vorzugsweise zwischen allen benachbarten felgenseitigen Umlenkeinrichtungen 2 jeweils eine Speichenstern-Formgebungseinrichtung oder eine Felgenwickel-Formgebungseinrichtung 8 angeordnet. Die Speichenstern-Formgebungseinrichtungen 7 werden vorzugsweise vor der Herstellung des Speichensterns 5 in der Fläche 1 befestigt. Die Felgenwickel-Formgebungseinrichtungen 8 werden bevorzugt vor dem Wickeln des Felgenwickels 6 in der Fläche 1 positioniert. Die Formgebungseinrichtungen erleichtern erheblich die Herstellung einer Felge 11 für ein Fahrzeug.

Figur 10 zeigt schematisch ein Speichenrad 11, das in diesem Beispiel als Felge für ein Kraftfahrzeug ausgebildet ist. Die Felge umfasst einen Speichenstern 5 mit Speichen 12, eine Nabe 13 und einen Felgenkranz 14. Die nabenseitigen Umlenkeinrichtungen 2 sind in die Nabe 13 eingebettet. Der Speichenstern 5 ist durch die nabenseitigen Umlenkeinrichtungen 2 an der Nabe 13 befestigt. Die felgenseitigen Umlenkeinrichtungen 4 sind in den Felgenkranz 14 eingebettet. Der Speichenstern 5 ist durch die felgenseitigen Umlenkeinrichtungen an dem Felgenkranz 14 befestigt. Der Speichenstern 5 kann zusätzlich oder alternativ durch Stoffschluss mit der Nabe 13 und/oder dem Felgenkranz 14 verbunden sein. Der Felgenkranz kann aus einem Felgenwickel 6 gebildet sein oder einen Felgenwickel 6 umfassen. Die nabenseitigen Umlenkeinrichtungen 2 können als Rohrabschnitte ausgebildet sein. In diesem Fall kann die Felge 11 durch die nabenseitigen Umlenkeinrichtungen 2 mit dem Fahrzeug verbunden werden.

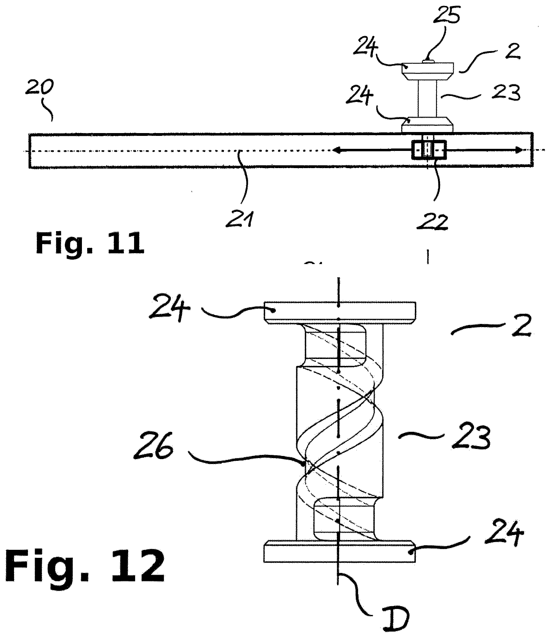

Figur 11 zeigt schematisch eine Verschiebeeinrichtung 20 mit einer gestrichelt dargestellten symbolischen Verschiebeachse 21. Entlang der Verschiebeachse 21 kann ein Beweger 22 verschoben werden. An dem Beweger 22 ist eine felgenseitige Umlenkeinrichtung 2 befestigt. Die felgenseitige Umlenkeinrichtung 2 hat die Form einer Rolle mit einem ausgenommenen Zentralabschnitt 23 und Wangen 24. in Figur 11 nicht dargestellte Fasern werden vorzugsweise von dem Zentralabschnitt 23 umgelenkt. Vorzugsweise sind die Wangen 24 von dem Zentralabschnitt 23 abnehmbar. Der Zentralabschnitt 23 kann als Hülse ausgeführt sein, welche im Speichenstern 5 verbleibt. Die Wangen 24 und der Zentralabschnitt 23 können auf eine Achse 25 aufgesteckt sein, welche an dem Beweger 22 befestigt ist. Analog kann auch eine nabenseitige Umlenkeinrichtung 4 an dem Beweger 22 befestigt sein. Eine nabenseitige Umlenkeinrichtung 4 kann die Form einer Rolle haben, die obenstehend in Bezug auf die felgenseitigen Umlenkeinrichtung 2 beschrieben ist.

Figur 12 zeigt eine felgenseitige Umlenkeinrichtung 2, welche im wesentlichen die Form einer Rolle mit einem Zentralabschnitt 23 und Wangen 24 hat. In den Zentralabschnitt 23 ist eine helixförmig Aussparung 26 eingebracht. In diese Aussparung 26 kann ein Faserbündel zur Umlenkung gelegt werden. Durch Verdrehen der Umlenkeinrichtung 2 um eine Drehachse D, die mit der Längsachse der Umlenkeinrichtung 2 zusammenfällt, ist es möglich, die Position eines umgelenken Faserbündels, das in Figur 12 nicht dargestellt ist, in Längsrichtung zu variieren. Vorzugsweise ist die Aussparung 26 in Längsrichtung so breit gestaltet, dass ein Faserbündel in der helixförmigen Aussparung 26 in einer Ebene quer zu der Längsrichtung verlaufen kann. Der Fasereinlauf und der Faserauslauf auf die bzw. von der Umlenkeinrichtung 2 kann dann an derselben Position in Längsrichtung der Umlenkeinrichtung 2 stattfinden. Alternativ oder zusätzlich kann eine nabenseitige Umlenkeinrichtungen 4 auf gleiche Art und Weise gestaltet sein und eingesetzt werden.

## Patentansprüche

1. Verfahren zum Herstellen eines Speichensterns (5) mit einem oder mehreren Endlosfaserbündeln (111),
**dadurch gekennzeichnet, dass** eine Herstellvorrichtung (100) zum Wickeln eines Faserwickels (3) und zur Verformung des Faserwickels (3) zu einem Speichenstern (5) verwendet wird,
wobei die Herstellvorrichtung (100) mehrere felgenkranzseitige Umlenkeinrichtungen (2) und mehrere nabenseitige Umlenkeinrichtungen (4) aufweist,
wobei die felgenkranzseitigen Umlenkeinrichtungen (2) und die nabenseitigen Umlenkeinrichtungen (4) um ein Inneres der Anordnung (10) aus den Umlenkeinrichtungen (2, 4) herum angeordnet sind,
wobei in einem ersten Schritt ein Endlosfaserbündel (111) um zumindest einen Teil der felgenkranzseitigen Umlenkeinrichtungen (2) herum als Faserwickel (3) gewickelt wird, und in einem zweiten Schritt nach diesem Wickeln zumindest ein Teil der nabenseitigen Umlenkeinrichtungen (4) in Richtung des Inneren der Anordnung (10) verschoben wird, wobei der Faserwickel (5) sternförmig verformt wird, sodass sich zwischen den nabenseitigen Umlenkeinrichtungen (4) und den felgenkranzseitigen Umlenkeinrichtungen (2) aus Teilen des Faserwickels (3) Speichen (12) ausbilden, die zumindest einen Teil eines geschlossenen Speichensterns (5) bilden.

2. Verfahren nach Anspruch 1, **dadurch gekennzeichnet, dass** wenigstens ein Teil der felgenkranzseitigen Umlenkeinrichtungen (2) in ihrer radialen Position in Bezug auf das Innere der Anordnung (10), insbesondere von einem Wickelzentrum (W), zu einer Startposition für den Verformungsprozess des Faserwickels (3) verschoben werden, um die Größe des herzustellenden Speichensterns (5) einzustellen.

3. Verfahren nach Anspruch 1 oder 2, **dadurch gekennzeichnet, dass** die felgenkranzseitigen Umlenkeinrichtungen wenigstens näherungsweise in Wickelrichtung des Faserwickels oder wenigstens näherungsweise in Umfangsrichtung um das Innere der Anordnung (10), insbesondere um das Wickelzentrum (W), herum verschoben werden, insbesondere derart, dass wenigstens eine Speiche eines Speichensterns (5) näherungsweise radial ausgerichtet wird.

4. Verfahren nach einem der Ansprüche 1 bis 3, **dadurch gekennzeichnet, dass** um einen Außenumfang des Speichensterns (5) herum ein Felgenwickel (6) aus einem Endlosfaserbündel gewickelt wird, der insbesondere als Felgenkranz (14) oder als ein Teil eines Felgenkranzes (14) ausgebildet ist.

5. Verfahren nach einem der vorangehenden Ansprüche, **dadurch gekennzeichnet, dass** eine Umlenkeinrichtung (2, 4) um eine Drehachse (D) drehbar ausgeführt ist und an ihrem Außenumfang mit einer helixförmigen Aussparung (26) versehen ist, in die der Faserwickel (3) abgelegt wird, wobei die Drehachse (D) im Inneren der helixförmigen Aussparung (26) verläuft und die Umlenkeinrichtung (2, 4) verdreht wird, um den Faserwickel (3) in Richtung der Drehachse (D) am Außenumfang der Umlenkeinrichtung (2, 4) zu verlagern.

6. Verfahren nach einem der vorangehenden Ansprüche, **dadurch gekennzeichnet, dass** ein felgenkranzseitiger Außenabschnitt des Speichensterns (5) und/oder des Felgenwickels (6) an eine Formgebungseinrichtung (7, 8) angelegt wird, vorzugsweise an die Innenseite des Speichensterns (5) und/oder des Felgenwickels (6).

7. Herstellvorrichtung (100) zum Herstellen eines Speichensterns (5) mit Endlosfasern, **dadurch gekennzeichnet, dass** die Herstellvorrichtung (100) folgendes aufweist:
mehrere felgenseitige Umlenkeinrichtungen (2) und mehrere nabenseitige Umlenkeinrichtungen (4), die jeweils zur Aufnahme eines Faserwickels (3) eingerichtet sind und die zu Beginn einer Verformung eines Faserwickels (3) um ein Inneres einer Anordnung (10) aus den Umlenkeinrichtungen (2) herum angeordnet sind, sowie
mehrere Verschiebeeinrichtungen (20) für die nabenseitigen Umlenkeinrichtung (4), durch die die nabenseitigen Umlenkeinrichtungen (4) von einer Position zu Beginn der Verformung in Richtung des Inneren einer Anordnung (10) aus den felgenseitigen Umlenkeinrichtungen (2) verschieblich sind.

8. Herstellvorrichtung (100) nach Anspruch 7, **dadurch gekennzeichnet, dass** wenigstens eine Verschiebeeinrichtung (20) in einer Fläche (1), in der die Umlenkeinrichtungen (2, 4) angeordnet sind, schwenkbar ausgeführt ist, insbesondere um einen Punkt im Inneren der Anordnung (10) herum, bevorzugt um das Wickelzentrum (W) herum.

9. Herstellvorrichtung nach einem der Ansprüche 7 oder 8, **dadurch gekennzeichnet, dass** in Wickelrichtung um das Innere der Anordnung (10) herum Gruppen von felgenseitigen und nabenseitigen Umlenkeinrichtungen (2, 4) aufeinander folgen, wobei eine Gruppe wenigstens eine Umlenkeinrichtung (2, 4), bevorzugt zwei Umlenkeinrichtungen (2, 4) und/oder mehr als zwei Umlenkeinrichtungen (2, 4) umfasst, und insbesondere auf zwei felgenseitige Umlenkeinrichtungen (2) eine nabenseitige Umlenkeinrichtung (4) folgt.

10. Herstellvorrichtung (100) nach einem der Ansprüche 7 bis 9, **dadurch gekennzeichnet, dass** eine Umlenkeinrichtung (2, 4) eine helixförmige Aussparung (26) aufweist und um eine theoretische Drehachse (D) herum drehbar ausgeführt ist, wobei ein Faserwickel (3) die Drehachse (D) im bewickelten Zustand umschlingt.

## Claims

1. Production method for a spoke star (5) with one or more continuous fibre bundles (111),
**characterized in that** a production device (100) is used for winding a fibre coil (3) and for deforming the fibre coil (3) into a spoke star (5),
wherein the production device (100) comprises a plurality of deflection devices (2) at the rim side and a plurality of deflection devices (4) at the hub side,
wherein the deflection devices (2) at the rim side and the deflection devices (4) at the hub side are arranged around an interior of the arrangement (10) of the deflection devices (2, 4),
wherein in a first step a continuous fibre bundle (111) is wound around at least a portion of the rim-side deflection devices (2) as a fibre coil (3), and in a second step, after this winding, at least a portion of the hub-side deflection devices (4) are shifted in the direction of the interior of the arrangement (10), the fibre coil (5) being deformed into a star, so that between the hub-side deflection devices (4) and the rim-side deflection devices (2) spokes (12) are formed from portions of the fibre coil (3), which form at least a portion of a closed spoke star (5).

2. Method according to Claim 1, **characterized in that** at least one portion of the rim-side deflection devices (2) is displaced in its radial position in relation to the interior of the arrangement (10), especially from a winding centre (W), to a start position for the deformation process of the fibre coil (3), in order to adjust the size of the spoke star (5) to be produced.

3. Method according to Claim 1 or 2, **characterized in that** the rim-side deflection devices are displaced at least approximately in the winding direction of the fibre coil or at least approximately in the circumferential direction about the interior of the arrangement (10), especially about the winding centre (W), especially in such a way that at least one spoke of a spoke star (5) is oriented approximately radially.

4. Method according to one of Claims 1 to 3, **characterized in that** a rim coil (6) of a continuous fibre bundle is wound around an outer circumference of the spoke star (5), which is configured in particular as a wheel rim (14) or a part of a wheel rim (14).

5. Method according to one of the preceding claims, **characterized in that** a deflection device (2, 4) is designed to be rotatable about an axis of rotation (D) and is provided with a helical recess (26) on its outer circumference, into which the fibre coil (3) is laid, the axis of rotation (D) running in the interior of the helical recess (26) and the deflection device (2, 4) being rotated in order to move the fibre coil (3) in the direction of the axis of rotation (D) on the outer circumference of the deflection device (2, 4).

6. Method according to one of the preceding claims, **characterized in that** a rim-side outer section of the spoke star (5) and/or the rim coil (6) is placed against a shaping device (7, 8), preferably against the inner side of the spoke star (5) and/or of the rim coil (6).

7. Production device (100) for producing a spoke star (5) with continuous fibres, **characterized in that** the production device (100) comprises the following: a plurality of rim-side deflection devices (2) and a plurality of hub-side deflection devices (4), each of which is set up to receive a fibre coil (3) and which at the start of a deformation of a fibre coil (3) are arranged around an interior of an arrangement (10) of the deflection devices (2), as well as a plurality of displacement devices (20) for the hub-side deflection device (4), by which the hub-side deflection devices (4) are displaceable from a position at the start of the deformation in the direction of the interior of an arrangement (10) of the rim-side deflection devices (2) .

8. Production device (100) according to Claim 7, **characterized in that** at least one displacement device (20) is designed to be pivotable in a surface (1) in which the deflection devices (2, 4) are arranged, especially about a point in the interior of the arrangement (10), preferably about the winding centre (W) .

9. Production device according to one of Claims 7 or 8, **characterized in that** groups of rim-side and hub-side deflection devices (2, 4) follow in succession in the winding direction about the interior of the arrangement (10), wherein a group comprises at least one deflection device (2, 4), preferably two deflection devices (2, 4), and/or more than two deflection devices (2, 4), and in particular one hub-side deflection device (4) follows two rim-side deflection devices (2).

10. Production device (100) according to one of Claims 7 to 9, **characterized in that** a deflection device (2, 4) comprises a helical recess (26) and is designed to be rotatable about a theoretical axis of rotation (D), wherein a fibre coil (3) is wrapped around the axis of rotation (D) in the wound condition.

## Revendications

1. Procédé de fabrication d'une étoile de rayons (5) avec un ou plusieurs faisceaux de fibres continues (111), **caractérisé en ce qu'**un dispositif de fabrication (100) est utilisé pour enrouler un rouleau de fibres (3) et pour déformer le rouleau de fibres (3) en une étoile de rayons (5),
le dispositif de fabrication (100) présentant plusieurs appareils de renvoi côté jante (2) et plusieurs appareil de renvoi côté moyeu (4),
les appareils de renvoi côté jante (2) et les appareils de renvoi côté moyeu (4) étant agencés autour d'un intérieur de l'agencement (10) des appareils de renvoi (2, 4),
dans une première étape, un faisceau de fibres continues (111) étant enroulé autour d'au moins une partie des appareils de renvoi côté jante (2), sous la forme d'un rouleau de fibres (3), et dans une deuxième étape, après cet enroulement, au moins une partie des appareils de renvoi côté moyeu (4) étant déplacée en direction de l'intérieur de l'agencement (10), le rouleau de fibres (5) étant déformé en étoile, de telle sorte qu'entre les appareils de renvoi côté moyeu (4) et les appareils de renvoi côté jante (2), des rayons (12) se forment à partir de parties du rouleau de fibres (3), qui forment au moins une partie d'une étoile de rayons (5) fermée.

2. Procédé selon la revendication 1, **caractérisé en ce qu'**au moins une partie des appareils de renvoi côté jante (2) sont déplacés dans leur position radiale par rapport à l'intérieur de l'agencement (10), notamment depuis un centre d'enroulement (W), vers une position de départ pour le processus de déformation du rouleau de fibres (3), afin d'ajuster la taille de l'étoile de rayons (5) à fabriquer.

3. Procédé selon la revendication 1 ou 2, **caractérisé en ce que** les appareils de renvoi côté jante sont déplacés au moins approximativement dans la direction d'enroulement du rouleau de fibres ou au moins approximativement dans la direction circonférentielle autour de l'intérieur de l'agencement (10), notamment autour du centre d'enroulement (W), notamment de manière à orienter approximativement radialement au moins un rayon d'une étoile de rayons (5).

4. Procédé selon l'une quelconque des revendications 1 à 3, **caractérisé en ce qu'**on enroule autour d'une circonférence extérieure de l'étoile de rayons (5) un rouleau de jante (6) composé d'un faisceau de fibres continues, qui est notamment réalisé sous la forme d'une jante (14) ou d'une partie d'une jante (14).

5. Procédé selon l'une quelconque des revendications précédentes, **caractérisé en ce qu'**un appareil de renvoi (2, 4) est réalisé sous forme rotative autour d'un axe de rotation (D) et est pourvu, sur sa circonférence extérieure, d'un évidement hélicoïdal (26), dans lequel est déposé le rouleau de fibres (3), l'axe de rotation (D) s'étendant à l'intérieur de l'évidement hélicoïdal (26) et l'appareil de renvoi (2, 4) étant tourné pour déplacer le rouleau de fibres (3) en direction de l'axe de rotation (D) sur la circonférence extérieure de l'appareil de renvoi (2, 4).

6. Procédé selon l'une quelconque des revendications précédentes, **caractérisé en ce qu'**une section extérieure, côté jante, de l'étoile de rayons (5) et/ou du rouleau de jante (6) est appliquée contre un appareil de formage (7, 8), de préférence contre le côté intérieur de l'étoile de rayons (5) et/ou du rouleau de jante (6).

7. Dispositif de fabrication (100) pour fabriquer une étoile de rayons (5) avec des fibres continues, **caractérisé en ce que** le dispositif de fabrication (100) présente les éléments suivants :
plusieurs appareils de renvoi côté jante (2) et plusieurs appareils de renvoi côté moyeu (4), qui sont chacun adaptés pour recevoir un rouleau de fibres (3) et qui sont agencés autour d'un intérieur d'un agencement (10) des appareils de renvoi (2) au début d'une déformation d'un rouleau de fibres (3), et
plusieurs appareils de déplacement (20) pour les appareils de renvoi côté moyeu (4), grâce auxquels les appareils de renvoi côté moyeu (4) peuvent être déplacés d'une position au début de la déformation en direction de l'intérieur d'un agencement (10) des appareils de renvoi côté jante (2).

8. Dispositif de fabrication (100) selon la revendication 7, **caractérisé en ce qu'**au moins un appareil de déplacement (20) est réalisé pivotant dans une surface (1) dans laquelle sont agencés les appareils de renvoi (2, 4), notamment autour d'un point à l'intérieur de l'agencement (10), de préférence autour du centre d'enroulement (W).

9. Dispositif de fabrication selon l'une quelconque des revendications 7 ou 8, **caractérisé en ce que** des groupes d'appareils de renvoi côté jante et côté moyeu (2, 4) se succèdent dans la direction d'enroulement autour de l'intérieur de l'agencement (10), un groupe comprenant au moins un appareil de renvoi (2, 4), de préférence deux appareils de renvoi (2, 4) et/ou plus de deux appareils de renvoi (2, 4), et notamment deux appareils de renvoi côté jante (2) étant suivis par un appareil de renvoi côté moyeu (4).

10. Dispositif de fabrication (100) selon l'une quelconque des revendications 7 à 9, **caractérisé en ce qu'**un appareil de renvoi (2, 4) présente un évidement hélicoïdal (26) et est réalisé sous forme rotative autour d'un axe de rotation théorique (D), un rouleau de fibres (3) entourant l'axe de rotation (D) à l'état enroulé.
